# EUROPEAN PATENT APPLICATION

(11) **EP 4 811 024 A1**
(43) Date of publication of application: **23.09.2026**
(21) Application number: 24891525.8
(22) Date of filing: 15.11.2024
(51) Int. Cl.: G02F 1/13, G02F 1/1334

(54) **LIGHT CONTROL SHEET, LIGHT CONTROL DEVICE, AND METHOD FOR PRODUCING LIGHT CONTROL SHEET**

(30) Priority: 16.11.2023 JP 2023195343
(71) Applicant: Toppan Holdings Inc., Tokyo 110-0016 (JP)
(72) Inventor: YOSHIDA, Tetsushi, Tokyo 110-0016 (JP)
(74) Representative: TBK
(86) International application number: PCT/JP2024/040715
(87) International publication number: WO 2025/105490

(57) **Abstract**

A liquid crystal composition includes a liquid crystal compound and at least one dichroic dye. The liquid crystal compound accounts for 45% by mass or more of the sum of the mass of a transparent polymer layer and the mass of the liquid crystal composition. A light control sheet exhibiting a second state has a total light transmittance T of 10% or more and 80% or less. The anisotropy value Rm of the dichroic dye is 0.25 or higher and 0.94 or lower, and satisfies equation (1). In equation (1), ln denotes a natural logarithm. Anisotropy value $Rm \geq 0.3434 ln \left(T\right) - 0.4297$

## Description

### [Technical Field]

The present disclosure relates to a light control sheet, a light control device, and a method for producing the light control sheet.

### [Background Art]

An example of a light control device constituting a window includes a pair of conductive layers and a switching layer positioned between the conductive layers. The switching layer contains a liquid crystal compound and a dichroic dye, while not containing a transparent polymer layer. The light control device is configured to exhibit a bright state and a dark state depending on whether a voltage is applied to the switching layer included in the light control device. In order to improve optical transparency when the bright state is exhibited, the light control device has an anisotropy value R and a transmittance τv in the bright state as defined below (e.g., see PTL 1).$Rmin < R < Rmax$ $Rmin = 0.8 * \left(0.015*τv-0.45\right)$ $Rmax = 1.2 * \left(0.015*τv-0.45\right)$

### [Citation List]

### [Patent Literature]

PTL 1: JP 2016-510907 A

### [Summary of the Invention]

### [Technical Problem]

Another example of a light control device includes a light control layer including a transparent polymer layer containing a plurality of voids, in place of the switching layer described above. In the light control layer, the liquid crystal compound and the dichroic dye occupy the voids contained in the transparent polymer layer. The light control device is configured to switch between a state in which refraction and scattering occur and a state in which refraction and scattering hardly occur at the interface between the liquid crystal compound and the transparent polymer layer depending on whether a voltage is applied to the light control layer. The light control device can thus exhibit a transparent state and an opaque state.

As such dichroic dyes contained in light control devices, for example, dyes appearing black have been proposed. A light control device containing a dichroic dye appearing black can exhibit a transparent state and an opaque state with a black color. Accordingly, when exhibiting the transparent state, the light control device allows visibility of an object through the light control device. In contrast, when exhibiting the opaque state, the light control device prevents visibility of the object through the light control device. Such a light control device is thus often used to protect the privacy of one space from occupants of the other space, where the two spaces are separated by the light control device.

Light control devices used for such applications are required to maintain light transmission in the transparent state, while reducing light transmission when exhibiting opacity and coloration, including colors other than black, for privacy protection via the light control device. That is, there is a need for a technique capable of increasing the contrast in a light control sheet, defined as the ratio of the transmittance in the transparent state to the transmittance in the opaque state.

### [Solution to Problem]

An aspect of a light control sheet includes: a first transparent electrode layer; a second transparent electrode layer; and a light control layer interposed between the first transparent electrode layer and the second transparent electrode layer, in which the light control layer includes a transparent polymer layer containing a plurality of voids and a liquid crystal composition occupying the voids, and the light control sheet exhibits a first state and a second state having a lower haze value than the first state depending on the magnitude of a voltage applied to the light control layer. The liquid crystal composition contains a liquid crystal compound and at least one dichroic dye. The liquid crystal compound accounts for 45% by mass or more of the sum of the mass of the transparent polymer layer and the mass of the liquid crystal composition. The light control sheet exhibiting the second state has a total light transmittance T of 10% or more and 80% or less. The dichroic dye has an anisotropy value Rm of 0.25 or higher and 0.94 or lower, and the anisotropy value Rm satisfies equation (1): $Anisotropy value Rm \geq 0.3434 ln \left(T\right) - 0.4297$

In equation (1), ln denotes a natural logarithm.

An aspect of a light control sheet includes: a first transparent electrode layer; a second transparent electrode layer; and a light control layer interposed between the first transparent electrode layer and the second transparent electrode layer, in which the light control layer includes a transparent polymer layer containing a plurality of voids and a liquid crystal composition occupying the voids, and the light control sheet exhibits a first state and a second state having a lower haze value than the first state depending on the magnitude of a voltage applied to the light control layer. The liquid crystal composition contains a liquid crystal compound and at least one dichroic dye. The liquid crystal compound accounts for 55% by mass or more of the sum of the mass of the transparent polymer layer and the mass of the liquid crystal composition. The light control sheet exhibiting the second state has a total light transmittance T of 10% or more and 80% or less. The dichroic dye has an anisotropy value Rm of 0.25 or higher and 0.94 or lower, and the anisotropy value Rm satisfies equation (2): $Anisotropy value Rm \geq 0.2989 ln \left(T\right) - 0.3472$

In equation (2), ln denotes a natural logarithm.

An aspect of a light control device includes the light control sheet and a driver configured to apply a voltage to the light control layer included in the light control sheet.

An aspect is provided which is a method for producing a light control sheet which includes a first transparent electrode layer; a second transparent electrode layer; and a light control layer interposed between the first transparent electrode layer and the second transparent electrode layer, the light control layer includes a transparent polymer layer containing a plurality of voids and a liquid crystal composition occupying the voids, and the light control sheet exhibits a first state and a second state having a lower haze value than the first state depending on the magnitude of a voltage applied to the light control layer. The production method includes: adjusting a coating solution containing a liquid crystal compound, a dichroic dye, and a polymerizable composition; forming a coating film between the first transparent electrode layer and the second transparent electrode layer with the coating solution; and polymerizing the polymerizable composition in the coating film. The adjustment of the coating solution includes adjusting the coating solution such that the liquid crystal compound accounts for 45% by mass or more of the total mass of the coating solution, and selecting the dichroic dye having an anisotropy value Rm of 0.25 or higher and 0.94 or lower, the anisotropy value Rm satisfying equation (1). The light control sheet exhibiting the second state has a total light transmittance T of 10% or more and 80% or less. $Anisotropy value Rm \geq 0.3434 ln \left(T\right) - 0.4297$

In equation (1), ln denotes a natural logarithm.

An aspect is provided which is a method for producing a light control sheet which includes a first transparent electrode layer; a second transparent electrode layer; and a light control layer interposed between the first transparent electrode layer and the second transparent electrode layer, the light control layer includes a transparent polymer layer containing a plurality of voids and a liquid crystal composition occupying the voids, and the light control sheet exhibits a first state and a second state having a lower haze value than the first state depending on the magnitude of a voltage applied to the light control layer. The production method includes: adjusting a coating solution containing a liquid crystal compound, a dichroic dye, and a polymerizable composition; forming a coating film between the first transparent electrode layer and the second transparent electrode layer with the coating solution; and polymerizing the polymerizable composition in the coating film. The adjustment of the coating solution includes adjusting the coating solution such that the liquid crystal compound accounts for 55% by mass or more of the total mass of the coating solution, and selecting the dichroic dye having an anisotropy value Rm of 0.25 or higher and 0.94 or lower, the anisotropy value Rm satisfying equation (2). The light control sheet exhibiting the second state has a total light transmittance T of 10% or more and 80% or less. $Anisotropy value Rm \geq 0.2989 ln \left(T\right) - 0.3472$

In equation (2), ln denotes a natural logarithm.

### [Brief Description of the Drawings]

[Fig. 1] Fig. 1 is a cross-sectional view of the structure of a first light control device including a normal-type light control sheet.
[Fig. 2] Fig. 2 is an enlarged cross-sectional view of a part of the structure of the light control sheet with no voltage applied to a light control layer illustrated in Fig. 1.
[Fig. 3] Fig. 3 is an enlarged cross-sectional view of a part of the structure of the light control sheet with a voltage applied to the light control layer illustrated in Fig. 1.
[Fig. 4] Fig. 4 is a cross-sectional view of the structure of a second light control device including a reverse-type light control sheet.
[Fig. 5] Fig. 5 is an enlarged cross-sectional view of a part of the structure of the light control sheet with no voltage applied to a light control layer illustrated in Fig. 4.
[Fig. 6] Fig. 6 is an enlarged cross-sectional view of a part of the structure of the light control sheet with a voltage applied to the light control layer illustrated in Fig. 4.
[Fig. 7] Fig. 7 is a graph showing the relationship between the contrast in the light control sheet and the thickness of the light control layer.
[Fig. 8] Fig. 8 is a graph showing the relationship between the total light transmittance in the light control sheet and the thickness of the light control layer.
[Fig. 9] Fig. 9 is a graph showing the relationship between the total light transmittance and the contrast in the light control sheet.
[Fig. 10] Fig. 10 is a graph showing the relationship between the anisotropy value Rm of a dichroic dye and the total light transmittance T in the light control sheet when the concentration of a liquid crystal compound is 55% by mass.
[Fig. 11] Fig. 11 is a graph showing the relationship between the anisotropy value Rm of the dichroic dye and the total light transmittance T in the light control sheet when the concentration of the liquid crystal compound is 45% by mass.

### [Description of the Embodiments]

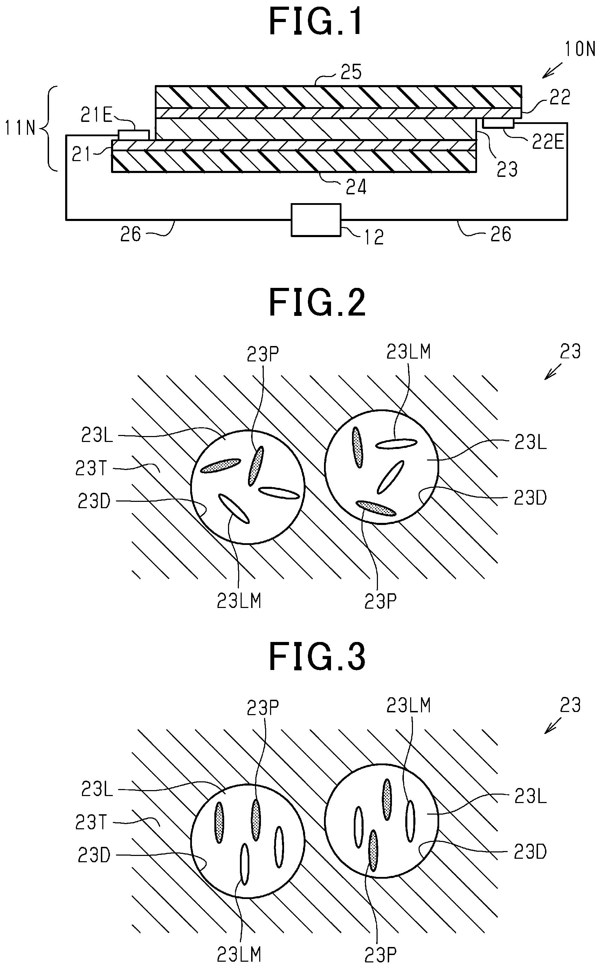

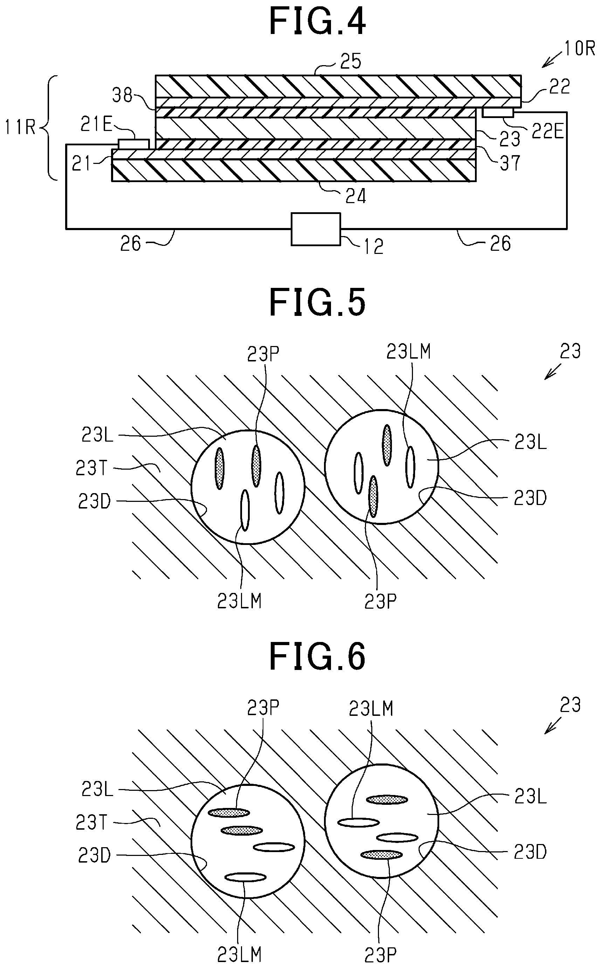

An embodiment of a light control sheet will be described with reference to Figs. 1 to 11. The light control sheet according to the present disclosure may be of either a normal type or a reverse type. The following describes a first light control device including a normal-type light control sheet and a driver with reference to Figs. 1 to 3, and a second light control device including a reverse-type light control sheet and a driver with reference to Figs. 4 to 6.

Light control sheets are attached to transparent members included in windows provided in various types of buildings, such as houses, stations, and airports, partitions installed in offices, and show windows installed in shops. Light control sheets may also be attached to transparent members included in windows provided in moving objects, such as vehicles and aircraft. Light control sheets may have a flat shape or a curved shape.

### [First Light Control Device]

A first light control device is described with reference to Figs. 1 to 3. Fig. 1 illustrates the structure of a light control device including a normal-type light control sheet. Fig. 2 illustrates a part of the structure of the light control sheet with no voltage applied to a light control layer. Fig. 3 illustrates a part of the structure of the light control sheet with a voltage applied to the light control layer.

As illustrated in Fig. 1, a first light control device 10N includes a normal-type light control sheet 11N and a driver 12. The light control sheet 11N includes a first transparent electrode layer 21, a second transparent electrode layer 22, and a light control layer 23. The light control sheet 11N includes a first transparent substrate 24 supporting the first transparent electrode layer 21, and a second transparent substrate 25 supporting the second transparent electrode layer 22.

In the light control sheet 11N, the light control layer 23 is interposed between the first transparent electrode layer 21 and the second transparent electrode layer 22. The first transparent electrode layer 21 is interposed between the first transparent substrate 24 and the light control layer 23. The second transparent electrode layer 22 is interposed between the second transparent substrate 25 and the light control layer 23.

The light control sheet 11N exhibits a first state and a second state having a lower haze value than the first state depending on the magnitude of the voltage applied to the light control layer 23. Since the light control sheet 11N included in the first light control device 10N is of the normal type, the light control sheet 11N exhibits the first state with no voltage applied to the light control layer 23. In contrast, the light control sheet 11N exhibits the second state with a voltage applied to the light control layer 23. The light control sheet 11N exhibiting the first state is opaque, while the light control sheet 11N exhibiting the second state is transparent. For example, the light control sheet 11N exhibiting the first state may have a haze value of 80% or more, while the light control sheet 11N exhibiting the second state may have a haze value of 10% or more and 80% or less. The haze value of the light control sheet 11N exhibiting the first state is preferably higher than 80%.

The light control sheet 11N includes a first electrode 21E attached to a part of the first transparent electrode layer 21 and a second electrode 22E attached to a part of the second transparent electrode layer 22. The light control sheet 11N further includes a wiring member 26 connected to the first electrode 21E and a wiring member 26 connected to the second electrode 22E. The first electrode 21E is connected to the driver 12 via the wiring member 26. The second electrode 22E is connected to the driver 12 via the wiring member 26.

The first transparent electrode layer 21 and the second transparent electrode layer 22 apply a voltage to the light control layer 23 to switch the light control layer 23 between the first state and the second state. Each of the transparent electrode layers 21 and 22 has optical transparency to visible light. The optical transparency of the first transparent electrode layer 21 enables visual recognition of an object through the light control sheet 11N. In the same manner as the optical transparency of the first transparent electrode layer 21, the optical transparency of the second transparent electrode layer 22 enables visual recognition of an object through the light control sheet 11N.

A material for forming each of the transparent electrode layers 21 and 22 may be, for example, any one selected from the group consisting of indium tin oxide, fluorine-doped tin oxide, tin oxide, zinc oxide, carbon nanotube, and poly(3,4-ethylene dioxythiophene).

A material for forming each of the transparent substrates 24 and 25 may be a synthetic resin or an inorganic compound. The synthetic resin is, for example, polyester, polyacrylate, polycarbonate, or polyolefin. The polyester is, for example, polyethylene terephthalate or polyethylene naphthalate. The polyacrylate is, for example, polymethyl methacrylate. The inorganic compound is, for example, silicon dioxide, silicon oxynitride, or silicon nitride.

Each of the electrodes 21E and 22E is, for example, a flexible printed circuit (FPC). The FPC includes a support layer, a conductor, and a protective layer. The conductor is sandwiched between the support layer and the protective layer. The support layer and the protective layer are formed of an insulating synthetic resin. For example, the support layer and the protective layer are formed of polyimide. The conductor is, for example, formed of a thin metal film. A material for forming the thin metal film may be, for example, copper. Each of the electrodes 21E and 22E is not limited to an FPC, and may be, for example, a metal tape.

The electrodes 21E and 22E are attached to the transparent electrode layers 21 and 22, respectively, via a conductive adhesive layer (not shown). In each of the electrodes 21E and 22E, the conductor is exposed from the protective layer or the support layer at a portion connected to the conductive adhesive layer.

The conductive adhesive layer may be, for example, formed of anisotropic conductive film (ACF), anisotropic conductive paste (ACP), isotropic conductive film (ICF), or isotropic conductive paste (ICP). In view of handleability in the process of manufacturing light control devices 10, the conductive adhesive layer is preferably an anisotropic conductive film.

For example, each wiring member 26 includes a metal wire and an insulating layer covering the metal wire. The wire is, for example, formed of copper.

The driver 12 is configured to apply a voltage to the light control layer 23 included in the light control sheet 11N. The driver 12 applies an AC voltage between the first transparent electrode layer 21 and the second transparent electrode layer 22. The driver 12 preferably applies a rectangular-waveform AC voltage between the pair of transparent electrode layers 21 and 22. In other words, the driver 12 preferably outputs a rectangular-wave voltage signal.

The light control layer 23 is described in more detail with reference to Figs. 2 and 3.

As illustrated in Fig. 2, the light control layer 23 includes a transparent polymer layer 23T and a liquid crystal composition 23L. The transparent polymer layer 23T contains multiple voids 23D. The liquid crystal composition 23L occupies the voids 23D in the transparent polymer layer 23T and contains a liquid crystal compound 23LM and a dichroic dye 23P.

The liquid crystal composition 23L is held in any one selected from the group consisting of a polymer network type, a polymer dispersed type, and a capsule type. The polymer network type has a three-dimensional crosslinked transparent polymer network, with the liquid crystal composition 23L held in interconnected voids 23D communicating with each other. The polymer network is an example of the transparent polymer layer 23T. The polymer dispersed type has a large number of isolated voids 23D in the transparent polymer layer 23T, with the liquid crystal composition held in the voids 23D dispersed in the transparent polymer layer 23T. In the capsule type, the liquid crystal composition 23L formed into a capsule shape is held in the transparent polymer layer 23T. This forms voids 23D filled with the liquid crystal composition 23L in the transparent polymer layer 23T.

In the light control layer 23, the void 23D may have a void diameter of 0.1 µm or more and 30 µm or less. The void diameter within the range of 0.1 µm or more and 30 µm or less can improve the effectiveness achieved by the dichroic dye 23P having an anisotropy value Rm that satisfies equations (1) and (2). The void diameter is measured in a cross section of the light control layer 23 taken in the thickness direction of the light control layer 23. When the void 23D appears circular in cross section, the diameter of the void 23D is equal to the void diameter. When the void 23D appears elliptical, the length of the major axis of the void 23D is equal to the void diameter. When the void 23D has an irregular shape, the length of the major axis of the ellipse with the smallest major-axis length among the ellipses circumscribing the void 23D is equal to the void diameter of the void 23D.

An example of the liquid crystal compound 23LM is any one selected from the group consisting of Schiff-base-type, azo-type, azoxy-type, biphenyl-type, terphenyl-type, benzoate-type, tolan-type, pyrimidine-type, cyclohexanecarboxylate-type, phenylcyclohexane-type, and dioxane-type liquid crystal compounds. The liquid crystal composition 23L contains a nematic liquid crystal having positive dielectric anisotropy as the liquid crystal compound 23LM.

In the light control layer 23, the concentration of the liquid crystal compound 23LM is expressed as the percentage by mass of the liquid crystal composition 23L relative to the total mass of the light control layer 23. That is, the concentration of the liquid crystal compound 23LM is expressed as the percentage by mass of the liquid crystal compound 23LM relative to the sum of the mass of the transparent polymer layer 23T and the mass of the liquid crystal composition 23L. The concentration of the liquid crystal compound 23LM may be, for example, 45% by mass or more or 55% by mass or more.

The dichroic dye 23P has an elongated shape. The absorbance of the molecules of the dichroic dye 23P in the visible region along the long-axis direction is greater than the absorbance of the molecules in the visible region along the short-axial direction. The dichroic dye 23P exhibits substantial transparency when the long-axis direction is parallel or substantially parallel to the direction of incidence of light. In contrast, the dichroic dye 23P exhibits a predetermined color when the long-axis direction is perpendicular or substantially perpendicular to the direction of incidence of light.

Accordingly, the dichroic dye 23P exhibits transparency when oriented such that its long-axis direction is parallel or substantially parallel to the direction of the normal to the contact surface of the light control layer 23 with the first transparent electrode layer 21 and the contact surface of the light control layer 23 with the second transparent electrode layer 22. In contrast, the dichroic dye 23P exhibits a predetermined color when oriented such that its long-axis direction is perpendicular or substantially perpendicular to the direction of the normal to the contact surface of the light control layer 23 with the first transparent electrode layer 21 and the contact surface of the light control layer 23 with the second transparent electrode layer 22. The color exhibited by the dichroic dye 23P is preferably black or a color close to black. The dichroic dye 23P is driven by a guest-host system in which the liquid crystal compound 23LM serves as a host. This causes the dichroic dye 23P to exhibit a color.

The dichroic dye 23P may be at least one selected from the group consisting of polyiodide, azo compounds, anthraquinone compounds, naphthoquinone compounds, azomethine compounds, tetrazine compounds, quinophthalone compounds, merocyanine compounds, perylene compounds, and dioxazine compounds. The dichroic dye 23P may be a single dye or a combination of two or more dyes. To improve the light resistance of the dichroic dye 23P and to increase the dichroic ratio, the dichroic dye 23P is preferably at least one selected from the group consisting of azo compounds and anthraquinone compounds. The dichroic dye 23P is more preferably an azo compound.

In addition to the liquid crystal compound 23LM and the dichroic dye 23P described above, the liquid crystal composition 23L may contain, for example, a monomer for forming the transparent polymer layer 23T.

As illustrated in Fig. 2, the liquid crystal compound 23LM is randomly oriented with no voltage applied to the light control layer 23. As a result, the dichroic dye 23P is randomly oriented, similar to the liquid crystal compound 23LM. Accordingly, the light control layer 23, and thus the light control sheet 11N, is opaque with no voltage applied to the light control layer 23. The light control sheet 11N thus exhibits the first state with a relatively high haze value. The light control sheet 11N also exhibits the predetermined color derived from the dichroic dye 23P.

In the first state, the light control sheet 11N has a haze value of 80% or more. The haze value is determined by a measurement method according to ASTM D1003-00. A measurement device for the haze value is, for example, a BYK haze-gard i instrument (manufactured by BYK-Gardner GmbH). In haze value measurement, the light beam incident on the light control sheet 11N includes light rays in the form of direct light. The maximum angle between the light rays included in the light beam incident on the light control sheet 11N and the beam axis of the light beam is smaller than 3 degrees. The light control sheet 11N is fixed such that the surface of the light control sheet 11N and the light beam incident on the surface are substantially perpendicular to each other, within ±2 degrees.

As illustrated in Fig. 3, the liquid crystal compound 23LM is oriented parallel to the electric field with a voltage applied to the light control layer 23. The light control sheet 11N is configured such that the long-axis direction of the liquid crystal compound 23LM is perpendicular to the above-described contact surface when a voltage is applied to the light control layer 23. That is, the liquid crystal compound 23LM is vertically oriented. As a result, the dichroic dye 23P is vertically oriented, similar to the liquid crystal compound 23LM. Accordingly, the light control layer 23, and thus the light control sheet 11N, is transparent with a voltage applied to the light control layer 23. The light control sheet 11N thus exhibits the second state with a relatively low haze value. The light control sheet 11N exhibits no predetermined color derived from the dichroic dye 23P.

### [Second Light Control Device]

A second light control device is described with reference to Figs. 4 to 6. The second light control device is different from the above-described first light control device 10N in including a reverse-type light control sheet. In the following description, the differences of the second light control device from the first light control device 10N will be described in detail, whereas components in the second light control device that are common to the first light control device 10N are designated by the same reference numerals as in the first light control device 10N, and details of these components will not be described again.

As illustrated in Fig. 4, a second light control device 10R includes a reverse-type light control sheet 11R and a driver 12. The light control sheet 11R includes a first alignment layer 37 and a second alignment layer 38. The first alignment layer 37 is interposed between the light control layer 23 and the first transparent electrode layer 21. The second alignment layer 38 is interposed between the light control layer 23 and the second transparent electrode layer 22.

The first alignment layer 37 and the second alignment layer 38 are vertical alignment films. The vertical alignment films orient the liquid crystal compound such that its long-axis direction is perpendicular to the surface opposite to the surface in contact with the first transparent electrode layer 21 and the surface opposite to the surface in contact with the surface of the second transparent electrode layer 22. In this manner, the alignment layers 37 and 38 regulate the orientation of the multiple liquid crystal compounds contained in the light control layer 23.

Materials for forming the first alignment layer 37 and the second alignment layer 38 are organic compounds, inorganic compounds, and mixtures thereof. Examples of the organic compounds include polyimide, polyamide, polyvinyl alcohol, and cyanide compounds. The inorganic compounds are, for example, silicon oxide and zirconium oxide. The material for forming the alignment layers 37 and 38 may be silicone. Silicone is a compound having an inorganic moiety and an organic moiety.

The light control layer 23 is described in more detail with reference to Figs. 5 and 6.

As illustrated in Fig. 5, the light control layer 23 includes a transparent polymer layer 23T containing voids 23D and a liquid crystal composition 23L occupying the voids 23D, similar to the light control layer 23 included in the normal-type light control sheet 11N. The liquid crystal composition 23L contains a liquid crystal compound 23LM and a dichroic dye 23P. However, the liquid crystal composition 23L contains a nematic liquid crystal having negative dielectric anisotropy as the liquid crystal compound 23LM.

As illustrated in Fig. 5, with no voltage applied to the light control layer 23, the liquid crystal compound 23LM is oriented perpendicular to the above-described contact surface by the alignment control force of the alignment layers 37 and 38. As a result, the dichroic dye 23P is vertically oriented, similar to the liquid crystal compound 23LM. Accordingly, the light control layer 23, and thus the light control sheet 11R, is transparent with no voltage applied to the light control layer 23. The light control sheet 11R thus exhibits the second state with a relatively low haze value. The light control sheet 11R exhibits no color derived from the dichroic dye 23P.

As illustrated in Fig. 6, the liquid crystal compound 23LM is oriented perpendicular to the electric field with a voltage applied to the light control layer 23. The light control sheet 11R is configured such that the long-axis direction of the liquid crystal compound 23LM is parallel to the above-described contact surface when a voltage is applied to the light control layer 23. That is, the liquid crystal compound 23LM is horizontally oriented. However, in the plane in which the liquid crystal compound 23LM is located, the azimuthal angle of the long-axis direction is random. As a result, the dichroic dye 23P is horizontally oriented, similar to the liquid crystal compound 23LM. However, in the plane in which the dichroic dye 23P is located, the azimuthal angle of the longitudinal direction of the dichroic dye 23P is random. Accordingly, the light control layer 23, and thus the light control sheet 11R, is opaque with a voltage applied to the light control layer 23. The light control sheet 11R thus exhibits the first state with a relatively high haze value. The light control sheet 11R exhibits the predetermined color derived from the dichroic dye 23P.

### [Optical Properties of Light Control Sheet]

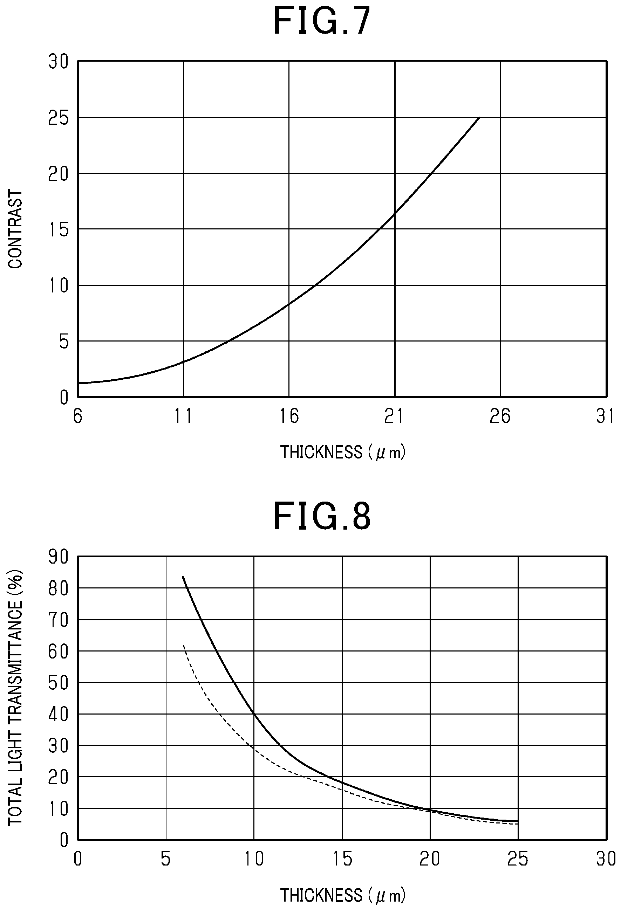

The optical properties of the light control sheets 11N and 11R will be described with reference to Figs. 7 to 11. While the light control sheet 11R includes vertical alignment layers, these sheets are common in that the light control layer 23 includes the transparent polymer layer 23T and the liquid crystal composition 23L containing the dichroic dye 23P. Accordingly, the optical properties of the light control sheet 11N will be described in place of a description of the optical properties of the light control sheet 11R.

The light control sheet 11N according to the present disclosure has a total light transmittance T of 10% or more and 80% or less when exhibiting the second state, and the dichroic dye 23P has an anisotropy value Rm of 0.25 or higher and 0.94 or lower. In addition, the light control sheet 11N satisfies any of the conditions described below.

(Condition 1) The concentration of the liquid crystal compound 23LM is 45% by mass or more, and the anisotropy value Rm of the dichroic dye 23P satisfies equation (1): $Anisotropy value Rm \geq 0.3434 ln \left(T\right) - 0.4297$

In equation (1), ln denotes a natural logarithm.

(Condition 2) The concentration of the liquid crystal compound 23LM is 55% by mass or more, and the anisotropy value Rm of the dichroic dye 23P satisfies equation (2): $Anisotropy value Rm \geq 0.2989 ln \left(T\right) - 0.3472$

In equation (2), ln denotes a natural logarithm.

The anisotropy value Rm, which is one parameter indicating the absorption characteristics of the dichroic dye 23P contained in the light control sheet 11N, is defined by equation (4): $Rm = \left\{E\left(p\right)-E\left(s\right)\right\} / \left\{E\left(p\right)+2\times E\left(s\right)\right\}$

In equation (4), the absorbance E(p) is a measurement value of the absorbance of light polarized parallel to the orientation direction of the liquid crystal compound. In other words, the absorbance E(p) is a measurement value of absorbance with the dichroic dye horizontally oriented within horizontally oriented cells containing only the liquid crystal compound and the dichroic dye. The absorbance E(s) is a measurement value of the absorbance of light polarized perpendicular to the orientation direction of the liquid crystal compound. In other words, the absorbance E(s) is a measurement value of absorbance with the dichroic dye vertically oriented within vertically oriented cells. The light used for measurement of the absorbance E(p) and E(s) has a wavelength of 550 nm.

The absorbance E(p) and E(s) can also be expressed by the following equations: $E \left(p\right) = εp \times d \times c$ $E \left(s\right) = εs \times d \times c$

In equations (5) and (6), the absorption coefficient εp represents the absorption coefficient of the dichroic dye 23P within horizontally oriented cells in which the dichroic dye is horizontally oriented. The absorption coefficient εs represents the absorption coefficient of the dichroic dye 23P within vertically oriented cells in which the dichroic dye 23P is vertically oriented. In the equations, d denotes the thickness of the horizontally oriented cells. In the equations, c denotes the concentration of the dichroic dye.

The dichroic dye 23P has a dichroic ratio DR that can be expressed by equation (7): $DR = E \left(p\right) / E \left(s\right)$

The dichroic ratio DR can be expressed from equations (5) to (7), as follows: $DR = \left(εp\times d\times c\right) / \left(εs\times d\times c\right) = εp / εs$

The dichroic ratio DR is thus a value intrinsic to the liquid crystal composition 23L.

Similarly, from equations (4) to (6), an anisotropy value Rc can be expressed as a calculation value, as follows: $Rc = \left(DR-1\right) / \left(DR+2\right)$

Similar to the dichroic ratio DR, the anisotropy value Rc is thus a value intrinsic to the liquid crystal composition 23L.

In contrast, in the light control sheet 11N according to the present disclosure, since the light control layer 23 includes the transparent polymer layer 23T, the absorbance E(p) and E(s) can be expressed as follows: $E \left(p\right) = εp \times d \times n \times c$ $E \left(s\right) = εs \times d \times c$

In equation (10), the absorption coefficient εp, the thickness d, and the concentration c are the same as the absorption coefficient εp, the thickness d, and the concentration c in equation (5). In equation (10), n denotes the enhancement factor of the optical path length being effectively enhanced as a result of the refraction and scattering of light at the interface between the liquid crystal composition 23L and the transparent polymer layer 23T. The enhancement factor n varies depending on, for example, the thickness of the light control layer 23 and the difference between the refractive index of the liquid crystal compound 23LM and the refractive index of the transparent polymer layer 23T.

As a result, the dichroic ratio DR is expressed by the following equation: $DR = \left(εp\times d\times n\times c\right) / \left(εs\times d\times c\right) = \left(εp\times n\right) / εs$

Accordingly, in the light control sheet 11N with the light control layer 23 including the transparent polymer layer 23T, the dichroic ratio DR is not a value intrinsic to the liquid crystal composition 23L.

As described above, the enhancement factor n varies depending on the thickness of the light control layer 23 and the refractive index of the liquid crystal compound 23LM, or specifically, the difference between the extraordinary refractive index ne and the refractive index np of the transparent polymer layer 23T. Additionally, the light control layer 23 includes the liquid crystal composition 23L and the transparent polymer layer 23T, and the dichroic dye 23P is contained in both the liquid crystal composition 23L and the transparent polymer layer 23T. The orientation of the dichroic dye 23P contained in the liquid crystal composition 23L changes depending on whether a voltage is applied to the light control layer 23, and the absorbance of the dichroic dye 23P changes accordingly. In contrast, the orientation of the dichroic dye 23P contained in the transparent polymer layer 23T is fixed, and thus the absorbance of the dichroic dye 23P remains unchanged. Since the amount of the dichroic dye 23P contained in the transparent polymer layer 23T changes depending on the concentration of the liquid crystal compound 23LM in the light control layer 23, the absorbance of the light control sheet 11N changes depending on the concentration of the liquid crystal compound 23LM in the light control layer 23.

The relationship between the contrast in the light control sheet 11N according to the present disclosure and the thickness of the light control layer 23 will now be described.

The materials listed below were used to prepare the light control sheet 11N for measurement of the contrast.

(a) Transparent electrode layers 21, 22: indium tin oxide
(b) Transparent substrates 24, 25: polyethylene terephthalate
(c) Spacer: truly spherical particles made of silicon dioxide
(d) Liquid crystal compound 23LM: fluorinated liquid crystal compound
(e) Polymerization initiator: photoinitiator (Irgacure Oxe04, manufactured by BASF Corporation)
(f) polymerizable composition: one or more selected from the group consisting of monofunctional acrylate, polyfunctional acrylate, monofunctional methacrylate, urethane acrylate, and polyester acrylate
(g) Dichroic dye 23P: mixed azo compound dye (yellow, blue, red)

In the dichroic dye 23P in (g), the dichroic ratio DR calculated by equation (8) was 16, and the anisotropy value Rm calculated by equation (4) was 0.83. The liquid crystal compound 23LM in (d) has an extraordinary refractive index ne of 1.68, and the transparent polymer layer 23T formed by polymerizing (f) has a refractive index np of 1.51. Accordingly, a value obtained by subtracting the refractive index np of the transparent polymer layer 23T from the extraordinary refractive index ne of the liquid crystal compound 23LM is 0.17.

The dichroic ratio DR was calculated using the measurement results of the absorption coefficients εp and εs, the thickness d of the horizontally oriented cells, the thickness d of the vertically oriented cells, and the concentration c. The spectra used for obtaining the absorption coefficients εp and εs and the absorbance E(p) and E(s) were determined using a UV-visible-near-infrared spectrophotometer (Lambda 1050, manufactured by PerkinElmer).

The first transparent substrate 24 provided with the first transparent electrode layer 21 and the second transparent substrate 25 provided with the second transparent electrode layer 22 were prepared. Then, a coating solution containing the liquid crystal compound 23LM, the polymerization initiator, the polymerizable compound, and the spacers was adjusted. In this adjustment, the percentage by mass of the liquid crystal compound 23LM relative to the total mass of the coating solution, or the concentration of the liquid crystal compound 23LM, was set to 55% by mass. The percentage by mass of the dichroic dye 23P relative to the total mass of the coating solution, or the concentration of the dichroic dye 23P, was set to 2.5% by mass.

After the coating solution was used to form a coating film between the first transparent electrode layer 21 and the second transparent electrode layer 22, the polymerizable composition was polymerized within the coating film to give the light control sheet 11N. Note that multiple light control sheets 11N having different thicknesses were produced as light control sheets 11N used to evaluate the dichroic ratio DR. The thicknesses of the light control sheets 11N were set to thicknesses within the range of 6 µm or more and 25 µm or less.

The contrast in each light control sheet 11N was measured by the method described below. Note that the contrast is a value obtained by dividing the total light transmittance observed when the light control sheet 11N exhibits the second state, by the total light transmittance observed when the light control sheet 11N exhibits the first state.

The total light transmittance of each light control sheet 11N was calculated by the method described below. For each of the above-described light control sheets 11N, the method according to ASTM D1003-00 was used to calculate the total light transmittance in the first state and the total light transmittance in the second state. In each light control sheet 11N, a state with a rectangular-waveform AC voltage of 50 Hz and 40 V applied between the pair of transparent electrode layers was set as the second state. In each light control sheet 11N, a state with no voltage applied between the pair of transparent electrodes was set as the first state. The total light transmittance was calculated using a haze and transparency meter (a BYK haze-gard i instrument, manufactured by BYK-Gardner GmbH).

The contrast of the light control sheet 11N is shown in Fig. 7.

As shown in Fig. 7, the contrast of the light control sheet 11N was found to tend to increase with increasing thickness of the light control layer 23. That is, it was found that the contrast is not uniquely determined when the dichroic dye 23P is used in the light control layer 23 including the transparent polymer layer 23T. Furthermore, it was found that when the thickness of the light control layer 23 was less than 21 µm, the contrast in the light-controlling sheet 11N did not satisfy the dichroic ratio DR of 16 calculated by equation (8). In contrast, it was found that when the thickness of the light control layer 23 is 21 µm or more, the contrast in the light control sheet 11N is greater than or equal to the dichroic ratio DR calculated by equation (8).

When the thickness of the light control layer 23 is less than 21 µm, the contrast in the light control sheet 11N seems to be smaller than 16 for the following reasons. More specifically, the transparent polymer layer 23T included in the light control layer 23 increases the optical path length in the light control layer 23. The resultant increase in the dichroic ratio DR seems to be outweighed by the decrease in the dichroic ratio DR caused by the fixation of the orientation of the dichroic dye 23P contained in the transparent polymer layer 23T.

In contrast, when the thickness of the light control layer 23 is 21 µm or more, the contrast in the light control sheet 11N seems to be greater than or equal to 16 for the following reasons. More specifically, the transparent polymer layer 23T included in the light control layer 23 increases the optical path length in the light control layer 23. The resultant increase in the contrast seems to outweigh the decrease in the contrast caused by the fixation of the orientation of the dichroic dye 23P contained in the transparent polymer layer 23T.

For each of the light control sheets 11N for which the contrast was calculated, the total light transmittance T was measured. In addition, multiple light control sheets 11N were produced by the same method as for the sheets in which the concentration of the liquid crystal compound 23LM was 55% by mass, except that the concentration of the liquid crystal compound 23LM was changed to 45% by mass. In the coating solution for forming a light control layer in which the concentration of the liquid crystal compound 23LM is 45% by mass, the amount of the polymerizable composition was increased by an amount corresponding to the reduction in the amount of the liquid crystal compound 23LM relative to the coating solution in which the concentration of the liquid crystal compound 23LM is 55% by mass.

The total light transmittance T of each light control sheet 11N was measured by the same method as for measuring the contrast of the light control sheet 11N.

The measurement results of the total light transmittance T are shown in Fig. 8. In Fig. 8, the relationship between the total light transmittance T observed when the concentration of the liquid crystal compound 23LM is 55% by mass and the thickness of the light control layer 23 is indicated by a solid line, and the relationship between the total light transmittance T observed when the concentration of the liquid crystal compound 23LM is 45% by mass and the thickness of the light control layer 23 is indicated by a dashed line.

As illustrated in Fig. 8, it was found that with the light control layer 23 having a thickness within the range of 6 µm or more and 25 µm or less, the total light transmittance T observed when the concentration of the liquid crystal compound 23LM is 55% by mass is higher than the total light transmittance T observed when the concentration of the liquid crystal compound 23LM is 45% by mass. Furthermore, it was found that the total light transmittance T of the light control sheet 11N tends to decrease with increasing thickness of the light control layer 23, irrespective of the concentration of the liquid crystal compound 23LM.

In each light control sheet 11N, the ordinary refractive index no of the liquid crystal compound 23LM is equal to the refractive index np of the transparent polymer layer 23T. Accordingly, in the light control sheet 11N exhibiting the second state, the light incident on the light control sheet 11N can be determined to undergo neither refraction nor scattering in the light control sheet 11N.

In the light control sheet 11N exhibiting the second state, the absorption coefficient of the liquid crystal composition 23L is different from the absorption coefficient of the transparent polymer layer 23T. The absorption coefficient of the liquid crystal composition 23L is εs, as described above. When the long-axis direction of the dichroic dye 23P contained in the transparent polymer layer 23T is random, the absorption coefficient of the transparent polymer layer 23T seems to be expressed by the following equation: $\left(εp+2εs\right) / 3$

Since the absorption coefficient εp is greater than the absorption coefficient εs, the absorption coefficient of the transparent polymer layer 23T is greater than the absorption coefficient εs. Accordingly, when the volume of the transparent polymer layer 23T increases in the light control layer 23, or in other words, when the volume of the liquid crystal composition 23L decreases, the proportion of the dichroic dye 23P located in the transparent polymer layer 23T increases, and thus the total light transmittance of the light control sheet 11N seems to decreases. The measurement results shown in Fig. 8 also indicate that the transmittance observed when the concentration of the liquid crystal compound 23LM is 45% by mass is lower than the transmittance observed when the concentration of the liquid crystal compound 23LM is 55% by mass.

For each of the light control sheets 11N with the concentration of the liquid crystal compound 23LM being 45% by mass, the contrast was calculated by the same method as for each of the light control sheets 11N with the concentration of the liquid crystal compound 23LM being 55% by mass.

For each of the light control sheets 11N with the concentration of the liquid crystal compound 23LM being 55% by mass, the haze value of the light control sheet 11N exhibiting the first state was calculated. The haze value was calculated using the method according to ASTM D1003-00 and a haze and transparency meter (a BYK haze-gard i instrument, manufactured by BYK-Gardner GmbH) as for the calculation of the total light transmittance T. It was found that the light control sheet 11N had a haze value of 80% or more and 99% or less, or 80% or more and that the haze value of the light control sheet 11N increased monotonically with increasing thickness of the light control sheet 11N from 6 µm to 25 µm. When the light control sheet 11N exhibits the first state, the haze value of the light control sheet 11N that is 80% or more enables improvement in the above-described effectiveness according to equations (1) to (3).

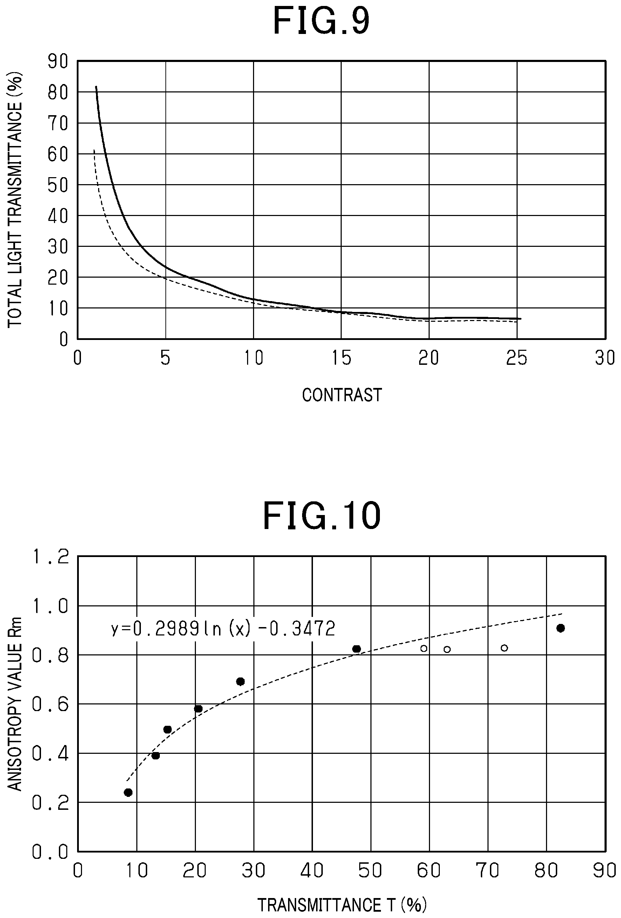

Fig. 9 shows the relationship between the total light transmittance T and the contrast in the light control sheet 11N. The total light transmittance T is observed when the light control sheet 11N exhibits the second state. In Fig. 9, the relationship between the contrast and the total light transmittance T observed when the concentration of the liquid crystal compound 23LM is 55% by mass is indicated by a solid line, and the relationship between the contrast and the total light transmittance T observed when the concentration of the liquid crystal compound 23LM is 45% by mass is indicated by a dashed line.

As shown in Fig. 9, the total light transmittance T of the light control sheet 11N was found to tend to decrease with increasing contrast, irrespective of the concentration of the liquid crystal compound 23LM. It was also found that when the concentration of the liquid crystal compound 23LM is 55% by mass with the total light transmittance T being 47.6% or less, the contrast is greater than or equal to 2. It was found that when the concentration of the liquid crystal compound 23LM is 45% by mass with the total light transmittance T being 34.0% or less, the contrast is greater than or equal to 2. When the contrast in the light control sheet 11N is greater than or equal to 2, the amount of light transmitted through the light control sheet 11N can be made to differ by a factor of two or more depending on whether the light control sheet 11N exhibits the first state or the second state. The light control sheet 11N can thus satisfy the required light-amount modulation function. Irrespective of the concentration of the liquid crystal compound 23LM, the total light transmittance T observed when the contrast is greater than or equal to 2 corresponds to the total light transmittance T observed when the light control layer 23 has a thickness of 9 µm or more.

Multiple dichroic dyes 23P having different anisotropy values Rm were prepared. In the dichroic dyes 23P, the anisotropy values Rm calculated by equation (4) fall within the range of 0.25 or higher and 0.94 or lower. Note that a dichroic dye 23P having a specific anisotropy value Rm may be a single dichroic dye or a mixture of two or more dyes. For the light control sheet 11N containing each dichroic dye 23P, the total light transmittance T was measured and the contrast was calculated by the same method as for the above-described light control sheet containing the dichroic dye 23P with an anisotropy value Rm of 0.83. Then, for the light control sheet 11N containing each dichroic dye 23P, the total light transmittance T was determined when the contrast was 2.

The calculation results of the anisotropy values Rm of the dichroic dyes 23P contained in the light control sheets 11N and the measurement results of the total light transmittance T are listed below in table 1.

**[Table 1]**

| ANISOTROPY VALUE Rm | TRANSMITTANCE (%) | |
|---|---|---|
| | 45% BY MASS | 55% BY MASS |
| 0.25 | 8.17 | 8.74 |
| 0.40 | 12.50 | 13.50 |
| 0.50 | 14.66 | 15.31 |
| 0.59 | 17.82 | 20.61 |
| 0.70 | 22.20 | 27.69 |
| 0.83 | 34.00 | 47.61 |
| 0.912 | 61.49 | 82.32 |

For the light control sheets 11N with a contrast smaller than 2, the calculation results of the anisotropy values Rm of the dichroic dyes 23P and the measurement results of the total light transmittance T are listed below in table 2.

**[Table 2]**

| ANISOTROPY VALUE Rm | TRANSMITTANCE (%) | |
|---|---|---|
| | 45% BY MASS | 55% BY MASS |
| 0.83 | 40.2 | 59.3 |
| 0.83 | 49.1 | 63.0 |
| 0.83 | 61.5 | 72.6 |

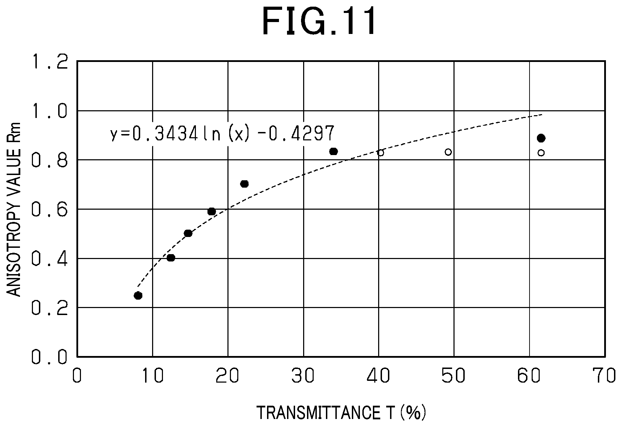

Figs. 10 and 11 show the relationship between the anisotropy value Rm and the total light transmittance T when the contrast is 2. Fig. 10 shows the relationship between the anisotropy value Rm and the total light transmittance T when the concentration of the liquid crystal compound 23LM is 55% by mass. Fig. 11 shows the relationship between the anisotropy value Rm and the total light transmittance T when the concentration of the liquid crystal compound 23LM is 45% by mass.

The approximate curve shown in Fig. 10 can be expressed by equation (13): $Rm = 0.2989 ln \left(T\right) - 0.3472$

The approximate curve shown in Fig. 11 can be expressed by equation (14): $Rm = 0.3434 ln \left(T\right) - 0.4297$

As shown in Figs. 10 and 11, in order to achieve the same total light transmittance T, the light control layer 23 in which the concentration of the liquid crystal compound 23LM is 45% by mass was found to need to contain a dichroic dye 23P with a higher anisotropy value Rm than the light control layer 23 in which the concentration of the liquid crystal compound 23LM is 55% by mass. As described above with reference to Fig. 9, the contrast tends to increase as the total light transmittance T decreases. Accordingly, when the concentration of the liquid crystal compound 23LM is 45% by mass or more, the anisotropy value Rm calculated by equation (4) is to be greater than or equal to equation (14). When the concentration of the liquid crystal compound 23LM is 55% by mass or more, the anisotropy value Rm calculated by equation (4) is to be greater than or equal to equation (13).

In this manner, the light control sheet 11N according to the present disclosure satisfies any one of condition 1 and condition 2, which are described above.

According to the light control sheet 11N in the present disclosure, when the anisotropy value Rm that can be calculated from the absorbance E(p) and E(s) specific to the dichroic dye 23P satisfies either equation (1) or equation (2), the light control sheet 11N with the contrast being greater than or equal to 2 can be provided. That is, the light control sheet 11N that can appear black in the first state may have a higher contrast, which is the ratio of the luminance in the second state to the luminance in the first state. In the present disclosure, the luminance in the first state and the luminance in the second state refer to the total light transmittance T in each state.

A value obtained by subtracting the refractive index np of the transparent polymer layer 23T from the extraordinary refractive index ne of the liquid crystal compound 23LM may be greater than or equal to 0.17. This allows improvement in the effectiveness achieved when the optical path length is enhanced as a result of refraction and scattering at the interface between the liquid crystal composition 23L and the transparent polymer layer 23T.

### [Method for Producing Light Control Sheet]

A method for producing a light control sheet according to the present disclosure includes: adjusting a coating solution containing a liquid crystal compound, a dichroic dye, and a polymerizable composition; forming a coating film between the first transparent electrode layer 21 and the second transparent electrode layer 22 with the coating solution; and polymerizing the polymerizable composition in the coating film. Adjusting the coating solution includes adjusting the coating solution such that the liquid crystal compound 23LM accounts for 45% by mass or more of the total mass of the coating solution, and selecting a dichroic dye 23P having an anisotropy value Rm of 0.25 or higher and 0.94 or lower, the anisotropy value Rm satisfying equation (1), given below. The light control sheets 11N and 11R exhibiting the second state have a total light transmittance T of 10% or more and 80% or less. $Anisotropy value Rm \geq 0.3434 ln \left(T\right) - 0.4297$

When the coating solution is adjusted such that the liquid crystal compound 23LM accounts for 55% by mass or more, the dichroic dye 23P with an anisotropy value Rm satisfying equation (2) may be selected. $Anisotropy value Rm \geq 0.2989 ln \left(T\right) - 0.3472$

In the method for producing the light control sheets 11N and 11R, the process of forming the light control layer 23 will be described in more detail below. The reverse-type light control sheet 11R is different from the normal-type light control sheet 11N in the presence of the pair of alignment layers 37 and 38, which are vertical alignment films. However, the process of forming the light control layer 23 included in the reverse-type light control sheet 11R is identical to the light control layer 23 included in the normal-type light control sheet 11N. In the following description, a method for producing the normal-type light control sheet 11N is described, whereas description of a method for producing the reverse-type light control sheet 11R will be omitted.

To produce the light control sheet 11N, the first transparent substrate 24 provided with the first transparent electrode layer 21 and the second transparent substrate 25 provided with the second transparent electrode layer 22 are first prepared.

Then, a coating solution containing the liquid crystal compound 23LM, the dichroic dye 23P, and the polymerizable composition is adjusted. As described above, the coating solution may contain a polymerization initiator and also spacers. The polymerization initiator may be, for example, a photoinitiator. The spacers may be, for example, truly spherical. In this case, the diameter of the spacers is determined as appropriate depending on the thickness intended for the light control layer 23. In this process, the coating solution is adjusted such that the percentage by mass of the liquid crystal compound 23LM relative to the mass of the coating solution, or the content of the liquid crystal compound 23LM, is 45% by mass or more or 55% by mass or more.

Subsequently, the coating solution is used to form a coating film between the first transparent electrode layer 21 and the second transparent electrode layer 22. For example, after the coating solution is used to form a coating film on the first alignment layer 37, the second alignment layer 38 is laminated on the coating film to interpose the coating film between the first transparent electrode layer 21 and the second transparent electrode layer 22.

A laminate including the pair of transparent electrode layers 21 and 22 and the coating film is irradiated with light to polymerize the polymerizable composition in the coating film. In this process, for example, ultraviolet radiation is applied to the laminate. The application of ultraviolet radiation to the coating film polymerizes the polymerizable composition to cause phase separation between the liquid crystal compound 23LM and the transparent polymer layer 23T. As a result, the transparent polymer layer 23T containing the voids 23D is formed from the polymerizable composition, and the liquid crystal composition 23L containing the liquid crystal compound 23LM and the dichroic dye 23P is located in the voids 23D.

As described above, an embodiment of the light control sheet achieves the effects described below.
(1) When the concentration of the liquid crystal compound is 45% by mass or more, the anisotropy value Rm greater than or equal to equation (1) enables the contrast to be increased in the light control sheets 11N and 11R capable of exhibiting coloration in the first state.
(2) When the concentration of the liquid crystal compound is 55% by mass or more, the anisotropy value Rm greater than or equal to equation (2) enables the contrast to be increased in the light control sheets 11N and 11R capable of exhibiting coloration in the first state.
(3) When the light control sheets 11N and 11R exhibit the first state, the haze value of the light control sheets 11N and 11R that is 80% or more enables improvement in the above-described effectiveness achieved by satisfying equation (1) or equation (2).
(4) The void diameter within the range of 0.1 µm or more and 30 µm or less enables improvement in the above-described effectiveness achieved by the anisotropy value Rm of the dichroic dye 23P satisfying equation (1) or equation (2).
(5) When a value obtained by subtracting the refractive index np from the refractive index ne is greater than or equal to 0.17, it is possible to improve the effectiveness achieved when the optical path length is enhanced as a result of refraction and scattering at the interface between the liquid crystal composition 23L and the transparent polymer layer 23T.

## Claims

1. A light control sheet comprising:
a first transparent electrode layer;
a second transparent electrode layer; and
a light control layer interposed between the first transparent electrode layer and the second transparent electrode layer, the light control layer including a transparent polymer layer containing a plurality of voids and a liquid crystal composition occupying the voids,
wherein the light control sheet exhibits a first state and a second state having a lower haze value than the first state, depending on a magnitude of a voltage applied to the light control layer,
the liquid crystal composition contains a liquid crystal compound and at least one dichroic dye,
the liquid crystal compound accounts for 45% by mass or more of a sum of mass of the transparent polymer layer and mass of the liquid crystal composition,
the light control sheet exhibiting the second state has a total light transmittance T of 10% or more and 80% or less, and
the dichroic dye has an anisotropy value Rm of 0.25 or higher and 0.94 or lower, the anisotropy value Rm satisfying equation (1): $Anisotropy value Rm \geq 0.3434 ln \left(T\right) - 0.4297$
where ln denotes a natural logarithm.

2. A light control sheet comprising:
a first transparent electrode layer;
a second transparent electrode layer; and
a light control layer interposed between the first transparent electrode layer and the second transparent electrode layer, the light control layer including a transparent polymer layer containing a plurality of voids and a liquid crystal composition occupying the voids,
wherein the light control sheet exhibits a first state and a second state having a lower haze value than the first state, depending on a magnitude of a voltage applied to the light control layer,
the liquid crystal composition contains a liquid crystal compound and at least one dichroic dye,
the liquid crystal compound accounts for 55% by mass or more of a sum of mass of the transparent polymer layer and mass of the liquid crystal composition,
the light control sheet exhibiting the second state has a total light transmittance T of 10% or more and 80% or less, and
the dichroic dye has an anisotropy value Rm of 0.25 or higher and 0.94 or lower, the anisotropy value Rm satisfying equation (2): $Anisotropy value Rm \geq 0.2989 ln \left(T\right) - 0.3472$
where ln denotes a natural logarithm.

3. The light control sheet according to claim 1 or 2, wherein
the light control sheet exhibiting the first state has a haze value of 80% or more.

4. The light control sheet according to claim 1 or 2, wherein
the voids have a void diameter of 0.1 µm or more and 30 µm or less.

5. The light control sheet according to claim 1 or 2, wherein
the liquid crystal compound has an extraordinary refractive index, the transparent polymer layer has a refractive index, and a value obtained by subtracting the refractive index from the extraordinary refractive index is greater than or equal to 0.17.

6. A light control device comprising:
the light control sheet according to claim 1 or 2; and
a driver configured to apply a voltage to the light control layer included in the light control sheet.

7. A method for producing a light control sheet including
a first transparent electrode layer,
a second transparent electrode layer, and
a light control layer interposed between the first transparent electrode layer and the second transparent electrode layer, the light control layer including a transparent polymer layer containing a plurality of voids and a liquid crystal composition occupying the voids, the light control sheet being configured to exhibit a first state and a second state having a lower haze value than the first state, depending on a magnitude of a voltage applied to the light control layer, the method comprising:
adjusting a coating solution containing a liquid crystal compound, a dichroic dye, and a polymerizable composition;
forming a coating film between the first transparent electrode layer and the second transparent electrode layer with the coating solution; and
polymerizing the polymerizable composition in the coating film,
wherein adjusting the coating solution includes
adjusting the coating solution such that the liquid crystal compound accounts for 45% by mass or more of total mass of the coating solution, and
selecting the dichroic dye having an anisotropy value Rm of 0.25 or higher and 0.94 or lower, the anisotropy value Rm satisfying equation (1), and
the light control sheet exhibiting the second state has a total light transmittance T of 10% or more and 80% or less $Anisotropy value Rm \geq 0.3434 ln \left(T\right) - 0.4297$
where ln denotes a natural logarithm.

8. A method for producing a light control sheet including
a first transparent electrode layer,
a second transparent electrode layer, and
a light control layer interposed between the first transparent electrode layer and the second transparent electrode layer, the light control layer including a transparent polymer layer containing a plurality of voids and a liquid crystal composition occupying the voids, the light control sheet being configured to exhibit a first state and a second state having a lower haze value than the first state, depending on a magnitude of a voltage applied to the light control layer, the method comprising:
adjusting a coating solution containing a liquid crystal compound, a dichroic dye, and a polymerizable composition;
forming a coating film between the first transparent electrode layer and the second transparent electrode layer with the coating solution; and
polymerizing the polymerizable composition in the coating film,
wherein adjusting the coating solution includes
adjusting the coating solution such that the liquid crystal compound accounts for 55% by mass or more of total mass of the coating solution, and
selecting the dichroic dye having an anisotropy value Rm of 0.25 or higher and 0.94 or lower, the anisotropy value Rm satisfying equation (2), and
the light control sheet exhibiting the second state has a total light transmittance T of 10% or more and 80% or less, $Anisotropy value Rm \geq 0.2989 ln \left(T\right) - 0.3472$
where ln denotes a natural logarithm.
